Europäisches Patentamt

European Patent Office

Office européen des brevets

(11) Veröffentlichungsnummer: **0 230 240**
**A2**

## (12) EUROPÄISCHE PATENTANMELDUNG

(21) Anmeldenummer: 87100248.1

(51) Int. Cl.⁴: **G11B 7/24**

(22) Anmeldetag: **10.01.87**

(30) Priorität: 16.01.86 DE 3601067

(43) Veröffentlichungstag der Anmeldung:
29.07.87 Patentblatt 87/31

(84) Benannte Vertragsstaaten:
**DE FR GB NL**

(71) Anmelder: **BASF Aktiengesellschaft
Carl-Bosch-Strasse 38
D-6700 Ludwigshafen(DE)**

(72) Erfinder: **Barzynski, Helmut, Dr.
An der Ameisenhalde 49
D-6702 Bad Dürkheim(DE)**
Erfinder: **Naarmann, Herbert, Dr.
Haardtblick 15
D-6719 Wattenheim(DE)**

(54) **Optischer Aufzeichnungsträger.**

(57) Die Erfindung betrifft einen optischen Aufzeichnungsträger vom Reflexionstyp, wobei die das Licht absorbierende Schicht als den das Licht absorbierenden Stoff Polypyrrol enthält.

EP 0 230 240 A2

## Optischer Aufzeichnungsträger

Die Erfindung betrifft einen optischen Aufzeichnungsträger vom Reflexionstyp, bestehend aus einer auf einem Trägermaterial und einer das Licht reflektierenden Schicht aufgebrachten lichtabsorbierenden Schicht.

Die Möglichkeit der Aufzeichnung von Informationen, insbesondere bei der Bild- und Datenspeicherung, auf optischem Wege wurde in letzter Zeit eingehend untersucht. Vor allem die damit erzielbaren ungewöhnlich hohen Aufzeichnungsdichten ließen ein solches Speichermedium von besonderem Interesse sein. Die Arbeitsweise der bekannten Systeme beruht darauf, daß zum Einschreiben eines Signals ein Laser-Strahl entsprechender Frequenz und ausreichender Intensität auf das Aufzeichnungsmedium focussiert wird wodurch in der Aufzeichnungsschicht eine bleibende Veränderung erzeugt wird. Zum Aufzeichnen einer Folge von Signalen wird der Schreiblaser entsprechend moduliert und eine relative Bewegung zwischen Laserstrahl und Aufzeichnungsmedium bewerkstelligt. Auf diese Weise entsteht eine Folge optisch nachweisbarer Muster. Das Auslesen dieser gespeicherten Signalmuster erfolgt mit einem Laserstrahl konstanter Intensität, welche jedoch nicht zur Veränderung der Schicht ausreicht, dessen reflektierenden Anteil bestimmt wird. Das im Aufzeichnungsmedium vorhandene Signalmuster verursacht eine entsprechende Veränderung der Reflexion, welche dann der gespeicherten Information proportional ist. Dieses Prinzip der Informationsspeicherung und -wiedergabe ist seit einiger Zeit bekannt und in einer Reihe von Druckschriften beschrieben.

In der US-A-40 97 895 werden Aufzeichnungsträger mit einem sogenannten Ablöseaufzeichnungsmedium beschrieben. Hier wird ein lichtreflektierendes Material, wie eine Aluminium-oder Goldschicht, mit einer lichtabsorbierenden Schicht, wie Fluorescein bedeckt. Wird ein focussierter, intensitätsmodulierter Laserstrahl, z.B. von einem Argon-oder Helium/Kadmium-Laser, auf das Aufzeichnungsmedium gerichtet, wird das lichtabsorbierende Material verdampft oder abgelöst und es entsteht ein Loch, durch welches die lichtreflektierende Schicht freigelegt wird. Die Dicke der das Licht absorbierenden Schicht wird so gewählt, daß das Bauelement ein minimales Reflexionsvermögen besitzt. Nach der Aufnahme ergibt sich dann ein maximaler Kontrast zwischen der minimalen Reflexion der das Licht absorbierenden Schicht und der Reflexion der das Licht reflektierenden Schicht. Es kann auf diese Weise ein Reflexions/Absorptions-Muster in dem Aufzeichnungsträger gebildet werden. Wenn das lichtreflektierende Material als dünne Schicht auf einem nichtleitenden Substrat vorgesehen ist, wird die aus dem Lichtstrahl absorbierte Energie in einer sehr dünnen Schicht konzentriert, weil der Energieverlust sowohl durch Reflexion an der dünnen Absorptionsschicht als auch aufgrund Übertragung durch die Reflexionsschicht gering ist. Die Aufnahmeempfindlichkeit eines solchen Aufzeichnungsträgers ist daher überraschend hoch.

Obwohl das bekannte System an sich zufriedenstellend arbeitet, ist der Nachteil in Kauf zu nehmen, daß es sich bei den verwendeten Argon- und Helium/Kadmium-Lasern um sperrige Bauelemente handelt, deren Betrieb erhebliche elektrische Energie erfordert. Außerdem wird ein äußerer Lichtmodulator benötigt. Wünschenswert wäre es aber, mit geringerem Energiebedarf arbeiten zu können; das wäre möglich bei Verwendung von Festkörper-Injektionslasern, z.B. Aluminiumgalliumarsenid-Lasern. Solche Laser strahlen Licht im Bereich zwischen 750 und 850 nm aus.

In den DE-A-29 51 340 und DE-A-29 51 341 werden optische Aufzeichnungsträger beschrieben, welche im Wellenlängenbereich der Strahlung dieser Halbleiter-Laser absorbieren. Hierzu werden Phthalocyanin-Farbstoffe durch übliches Vakuumverdampfen auf die Lichtreflexionsschicht aufgebracht. Dies muß in Form einer dünnen Schicht optischer Qualität erfolgen, so daß bei der Frequenz des verwendeten Laserstrahls Licht absorbiert wird und dabei durch Ablösen der Absorptionsschicht oder durch Schmelzen glatte Löcher entstehen. Nachteilig bei den beschriebenen optischen Aufzeichnungsschichten ist die durch den Aufdampfvorgang bedingt erhöhte Körnigkeit der lichtabsorbierenden Schicht, wodurch sich nur ein geringes Signal-Rauschspannungsverhältnis ergibt.

Der Erfindung lag daher die Aufgabe zugrunde, Absorptionsmaterialien für die genannten optischen Aufzeichnungsträger bereitzustellen, welche im Wellenlängenbereich üblicher Halbleiter-Laser absorbieren und in einer derart einheitlich dünnen und glatten Schicht aufgebracht werden können, daß sich mit der üblichen Aufzeichnungstechnik ein Aufzeichnungsmuster mit einem Signal-/Rauschspannungsverhältnis von wenigstens 40 dB ergibt.

Es wurde nun gefunden, daß optische Aufzeichnungsträger im wesentlichen, bestehend aus einer auf einem Trägermaterial und einer das Licht reflektierenden Schicht aufgebrachten lichtabsorbierenden Schicht die aufgabengemäß geforderten Eigenschaften aufweisen, wenn die lichtabsorbierende Schicht als den das Licht absorbierenden Stoff Polypyrrol enthält.

Polypyrrol absorbiert Licht im gesamten sichtbaren Spektralbereich, so daß zur Aufzeichnung alle gebräuchlichen Laser eingesetzt werden können. Die in dem erfindungsgemäßen Aufzeichnungsträger eingesetzten Pyrrol-Polymerisate weisen eine rotationssymetrische, meist nahezu kugelförmige Form auf und haben einen mittleren Teilchendurchmesser zwischen 0,01 und 0,3 µm. Größere Teilchen würden ein zu schlechtes Signal-Rauschverhältnis, kleinere Teilchen Schichten mit einem für Halbleiter-Laser ungünstiges Lichtabsorptionsverhalten ergeben.

Die Verbindungen aus der Klasse der Pyrrole, die sich zur Herstellung für die geeigneten Polymerisate eignen, sind einmal Pyrrol selbst als auch die substituierten Pyrrole, die N-Alkylpyrrole, N-Arylpyrrole, die an den C-Atomen monoalkyl-oder thialkylsubstituierten Pyrrole und die an den C-Atomen monohalogen oder dihalogen substituierten Pyrrole. Pyrrol kann allein oder in Mischung mit anderen Verbindungen aus der Klasse der Pyrrole verwendet werden. Vorzugsweise verwendet man unsubstituiertes Pyrrol selbst. Werden substituierte Pyrrole eingesetzt, so sind das 3,4-Dialkylpyrrol, insbesondere mit 1 bis 4 C-Atomen im Alkylrest, sowie auch die 3,4-Dihalogenpyrrole, insbesondere das 3,4-Dichlorpyrrol bevorzugt. Es können auch gegebenenfalls geringe Mengen, z.B. zwischen 0,1 und 10 Mol, bezogen auf ein Mol Pyrrol anderer heterocyclischer Verbindungen, die einen konjugierten -Elektronensystem enthalten, wie Furan, Thiophen oder Thiazol mitverwendet werden.

Zur Herstellung der feinteiligen Pyrrol-Polymerisate werden die Verbindungen aus der Klasse der Pyrrole in Lösung mit Sauerstoff enthaltende Oxidationsmittel behandelt. Zweckmäßig verwendet man auf 1 Mol Pyrrol bzw. Gemischen aus Pyrrolen untereinander oder mit anderen mit Pyrrolen copolymerisierbaren Verbindungen 0,2 bis 10 Mol des Oxidationsmittels. Verwendet man weniger als 1 Mol, so kann man feststellen, daß ein Teil der verwendeten Ausgangsubstanz nicht zu Polymeren umgewandelt wird. Größere Mengen an Oxidationsmitteln zu verwenden ist nicht erforderlich, da die Menge ausreicht, die gesamte Menge der Ausgangsstoffe in Polymere umzuwandeln. Ein Überschuß über die angegebene Menge hinaus ist in den meisten Fällen nicht erforderlich, kann jedoch gelegentlich bestimmte Effekte bewirken. Von den Sauerstoff enthaltenden Oxidationsmitteln haben sich besonders Peroxosäuren und deren Salze, die Peroxodischwefelsäure und deren Alkali-und Ammoniumsalze bewährt. Vorzugsweise werden auch Peroxoborate oder Peroxochromate, wie Natriumperborat oder Kaliumbichromat verwendet. Außerdem sind Permanganate, wie Kaliumpermanganat geeignet, wenn man diesen Permanganaten geringe Mengen Säuren zusetzt. Auch ist bevorzugt die Verwendung von Wasserstoffsuperoxid, wobei hierbei die Anwesenheit von Leitsalzen unumgänglich ist. Auch organische Peroxide, wie Benzoyl-oder Lauroylperoxid sind geeignet, ferner Perester wie beispielsweise Perpivalat u.a. Beim Arbeiten in organischen Lösungsmitteln sind auch lösliche Perchlorate, wie beispielsweise Eisenperchlorat geeignet.

Die Herstellung der feinteiligen Pyrrol-Polymerisate erfolgt in Lösung, wobei sich Wasser als Lösungsmittel, ggf. in Abmischung mit organischen mit Wasser mischbaren Lösungmitteln bewährt haben. Es können aber auch organische Lösungsmittel, wie Dimethylsulfoxid, Methylenchlorid, Methanol, Ethanol, Acetonitril, Sulfolan, Ethylencarbonat, Propylencarbonat, Dioxan oder Tetrahydrofuran, verwendet werden. Man arbeitet zweckmäßig so, daß die Lösungen 0,1 bis 50, vorzugsweise 1 bis 5 Gew.-% des Pyrrols oder der Gemische der Pyrrole, ggf. mit anderen Verbindungen enthalten. Die Menge der zuzusetzenden Oxidationsmitteln wird nach dem oben angegebenen Prinzip gemessen. Die Umsetzung kann zweckmäßig in einem Temperaturbereich von 0 bis 100°, vorzugsweise von 15 bis 40°C erfolgen. Meistens bekommt man zu zufriedenstellenden Ergebnissen, wenn die Umsetzung bei Raumtemperatur durchgeführt wird.

Die erhaltenen feinteiligen Polymerisate werden vorzugsweise zusammen mit einem polymeren Bindemittel in dünner Schicht auf die Unterlage aufgetragen. Die Schichtdicke beträgt zwischen 0,02 bis 1,0 µm und das Polypyrrol/Bindemittelverhältnis erstreckt sich von 10:1 bis 1:10.

Als polymere Bindemittel kommen Homo-oder Copolymerisate von (Meth)Acrylsäureestern, Polyvinylverbindung, lösliches Polycarbonat, Polystyrol, lösliche Cellulosederivate, Polyolefine u.ä. in Frage.

In einer weiteren Ausgestaltung läßt sich die den erfindungsgemäßen optischen Aufzeichnungsträger kennzeichnende lichtabsorbierende Schicht derart herstellen, daß das Polypyrrol direkt auf den Reflektor, beispielsweise galvanisch, abgeschieden wird. Hinzu wird Wasser als Lösungsmittel verwendet, dem organische Lösungsmittel, wie Alkohol oder wasserlösliche Ketone, und Leitsalze zugesetzt werden. Als geeignete Leitsalze kommen $KHSO_2$ $Na_2SO_4$, $KBF_4$, $LiClO_4$ oder auch Säuren wie $HClO_4$, $HClOOH$, $H_2SO_4$, $HNO_3$ und $H_3PO_4$ in Frage.

Hinsichtlich des sonstigen Aufbaus entsprechen die erfindungsgemäßen optischen Aufzeichnungsträger dem Stand der Technik. Üblicherweise befindet sich die Aufzeichnungsschicht auf einem Trägermaterial. Ein solches Substrat sollte eine optisch glatte, ebene Fläche besitzen. Im allgemeinen werden hierfür Platten oder Scheiben aus Glas oder Kunststoff eingesetzt. Auf diesem Substrat befindet sich die Lichtreflexionsschicht, welche das zum Aufzeichnen und zur Wiedergabe benutzte Licht reflektiert. Geeignete Materialien sind Aluminium, Rhodium, Gold und ähnliches. Die Schichtstärke dieser Reflexionsschicht muß eine solche Dicke aufweisen, daß sie das eingestrahlte Licht reflektieren kann. Sie beträgt üblicherweise von 5 bis 100 nm. Wenn sich das Lichtreflexionsmaterial als selbsttragende, optisch glatte Schicht herstellen läßt, kann das Trägermaterial entfallen.

Auf die Lichtreflexionsschicht wird nun die den erfindungsgemäßen optischen Aufzeichnungsträger kennzeichnende das Licht absorbierende Schicht in der angegebenen Weise aufgebracht. In einer zweckmäßigen Ausgestaltung kann sich die Herstellung einer Zwischenschicht zwischen der Reflexionsschicht und der Absorptionsschicht empfehlen, ebenso ist das Aufbringen der an sich bekannten Deck-/ bzw. Schutzschicht auf die lichtabsorbierende Schicht möglich.

Die Erfindung sei beispielhaft anhand der folgenden Versuche näher erläutert.

## Beispiel 1

Aus einer Lösung von 25 g und 0,1 g $Na_2SO_4$ in 500 ml Wasser und 500 g Äthanol wurden anodisch auf eine goldbedampfte Glasplatte eine 0,1 μm dicke Polypyrrolschicht abgeschieden. Die Stromdichte betrug dabei 0,03 mA/cm². Mit dem focussierten Strahl sowohl eines 25 mW He/Ne-Laser ($\lambda$ = 633 nm) als auch eines 8 mW Ga/As-Halbleiter-Lasers konnten in die Absorptionsschicht Löcher von 0,6 μm Durchmesser eingeschrieben werden.

## Beispiel 2

Zu einer Lösung aus 5 g eines Copolymerisats aus 70 Gew.-% Methylmethacrylat und 30 Gew.-% Methacrylsäure mit einem K-Wert von 40, 45 g Di-Cyclohexylperoxicarbonat und 0,2 g Trichloressigsäure in 100 g Äthanol wurden unter Rühren innerhalb von einer Stunde 1,5 g Pyrrol zugetropft. Dabei verfärbte sich die Lösung über grün nach - schwarz. Im unmittelbaren Anschluß daran wurde die Lösung in einer Fotolack-Schleuder auf eine Acrylglas-Platte aufgetragen. Die Platte wurde über Nacht bei 80°C gelagert. Die resultierende gleichmäßige, grau-grüne Schicht hatte eine Dicke von 0,5 μm. Die Extinktion bei 830 nm betrug 0,8.

Mit dem focussierten Strahl eines 8 mWGa/As-Halbleiter-Lasers ($\lambda$ = 830 nm) konnten in die Schicht Löcher mit einem Durchmesser von 0,8 μm eingebrannt werden. Die Empfindlichkeit betrug etwa 1 nJ/Loch.

## Ansprüche

1. Optischer Aufzeichnungsträger aus einer auf einem Trägermaterial und einer das Licht reflektierenden Schicht aufgebrachten lichtabsorbierenden Schicht, dadurch gekennzeichnet, daß die lichtabsorbierende Schicht als den das Licht absorbierende Stoff Polypyrrol enthält.

2. Optischer Aufzeichnungsträger gemäß Anspruch 1, dadurch gekennzeichnet, daß das Polypyrrol aus rotationssymetrischen Teilchen besteht, welche einen mittleren Teilchendurchmesser zwischen 0,01 bis 0,3 μm aufweisen.